## Europäisches Patentamt
## European Patent Office
## Office européen des brevets

(19)

(11) Publication number: **0 086 761**
A1

(12)

# EUROPEAN PATENT APPLICATION

(21) Application number: 83850014.8

(51) Int. Cl.³: **F 16 B 12/50**

(22) Date of filing: 26.01.83

(30) Priority: 28.01.82 SE 8200449

(71) Applicant: Opto-System AB, P.O.B. 10, S-640 31 Mellösa (SE)

(43) Date of publication of application: 24.08.83
Bulletin 83/34

(72) Inventor: Magnér, Bengt, P.O.B. 142, S-640 31 Mellösa (SE)

(84) Designated Contracting States: AT BE CH DE FR GB IT LI NL SE

(74) Representative: Klauber, Tomas, Patentbyran Klauber & Co. AB Kungsgatan 44, S-111 35 Stockholm (SE)

(54) Device for detachable joining of two structural parts.

(57) A device for detachable joining of two structural parts (10, 50) comprises in a chamber (50) a movable locking means (30) which at the end thereof which projects from the chamber is provided with hook elements (31) for insertion into openings in a carrier rail or similar. The locking means is provided with a window (320) in which a cam element (230) is rotarily situated for bringing the locking means into a locked position. The invention is applicable for mounting brackets, tubes or the like at carrier rails, carrier posts, other tubes etc.

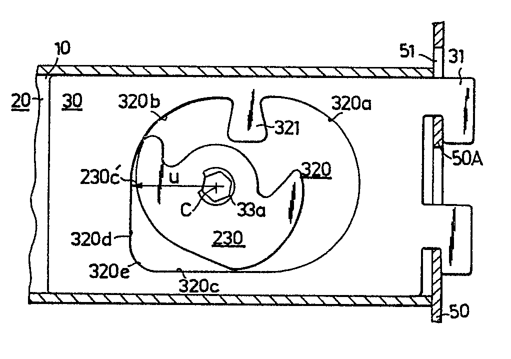

ACTORUM AG

APPLIANCE FOR DETACHABLE JOINING OF TWO STRUCTURAL PARTS

The invention concerns an appliance for the detachable joining of two structural parts of the kind described in the introductory part of the appended patent claim 1. Such an appliance is best suited, though not exclusively so, to the mounting of a first structural part such as a bracket in the space between two other structural parts, e.g. posts or wall-mounted rails, which are so fixedly positioned that they cannot be more spaced for inserting the said first structural part. A contrivance of this type intended for the insertion of a bracket element in a post provided with two parallel rows of holes is described in Swedish patent application Ser. No. 379.087 (A.G. Offenbroich), published on September 22, 1975. The appliance comprises a locking mechanism whose engaging part comprises two pairs of apposed but spaced hooks and a guide element formed of a threaded bolt welded to the two pairs of hooks. In the first structural part, a cavity is arranged consisting of a recess into which the engaging part can be received, an elongated cylindrical hole which with its one end is connected to the recess, and a cavity, open in one direction, into which the hole opens at its other end. A nut screwed onto the end of the bolt protruding into the cavity defines an activating means of the appliance and can be controlled by a manually operated turning device, an ordinary spanner in the instance, so that the engagement portion can be retracted into the said recess or made to project therefrom. The cavity for the nut may appear unaesthetic and can easily collect dust. Tightening and releasing of the device requires repeated shifting of the grip as the nut must be given several turns in both instances. A further grip is also required as it is necessary to tap the threaded bolt in its axial direction so as to make the engagement part protrude.

It has been also known to provide on a locking means hook elements which can be inserted in preselected openings in carrier rails or similar, the locking means being displaceable by an operating device having two conical surfaces with a common axis extending parallel with the locking means. The conic surfaces can be made to approach one another and to withdraw one from another with the aid of a threaded bolt having the same axis and they engage engagement edges provided on the locking means and extending at right angles thereto. When the conical surfaces approach one another, the locking means is withdrawn further into the bracket and locking is effected. Brackets generally have a flattened cross-section, which is why conical surfaces contained therein have to be narrow and may have only a minor inclination to their axis, which in turn means that the threaded bolt needs several turns for both tightening and release.

Furthermore, it has been proposed in the German Auslegeschrift 20 63 116 published on May 31, 1979 (Schadebo Aluminium Bouw B.V.) that, in a construction similar to the one just described, an eccentrically mounted cylindrical rod should be used as an actuator instead of the pair of conical surfaces. The locking device in this case is U-shaped in plan view and has shanks whose projecting ends at least are resilient and yield and which are never completely withdrawn into the cavity in the structural part in question, so that this part cannot usually be mounted between two fixed posts. The eccentric rod acts upon the web portion of the U-shaped device and can in turn be moved by a manually operatable tool such as a hexagon spanner. This device does not require repeated shifting of grip to tighten and loosen, but neither does it allow a slim construction, since the eccentric rod must have a not inconsiderable diameter and is mounted at one end by means of a flange of even greater diameter. In addition, the eccentricity must correspond to the required path of travel of the locking means. The flange is completely visible and the entire steering mechanism is moreover held in place only by friction with the locking means, and this friction is practically non-existent in the freed position.

It is an object of the present invention to provide a device of the kind mentioned afore which may be operated by a rotational motion of less than one full turn and which at the same time has a fully encased and from the outside practically invisible locking and actuating means not comprising any parts which are loose in the unlocked state and/or during transport when they might get lost. It is another object of the invention to provide a device of the afore said kind which may be produced at a lower cost than devices known up to now and which, when desired, can be made with a very slim profile and/or with a fully retractable engagement portion for mounting between parts at fixed positions (so-called wall-to-wall mounting).

In an alternative embodiment, the device according to the present invention can be constructed as an independent unit with a casing of its own for connection to or building into an arbitrary structural part.

The invention is characterized by the features indicated in the characterizing portion of patent claim 1 and advantageous, further developed embodiments are indicated in dependent claims.

The invention will now be described in greater detail with the aid of the enclosed schematic drawings which refer to exemplary embodiments and in which

Fig. 1 shows the terminal portion of a bracket with a device of the present invention in a first embodiment and in projecting open position,

Fig. 2 is a cross-section along the plane II-II of Fig.

1, but without the cam element,

Fig. 3 shows at a greater scale the cam element in a somewhat modified form,

Fig. 4 is a cross-section along plane IV-IV in Fig. 3,

Fig. 5 shows another embodiment of the device according to the invention in retracted, locked position,

Fig. 6 and 7 show a third embodiment in two different retracted positions,

Figs. 8 to 11 show an alternative embodiment of the cam element in various retracted positions,

Figs. 12 to 15 show still another preferred embodiment of the cam element and window in various retracted positions,

Fig. 16 shows a fifth embodiment on a smaller scale,

Fig. 17 shows on a still smaller scale a rack with various elements provided with devices according to the invention,

Fig. 18 shows the carrier rail of Fig. 17 in a view in the sense of arrow XVIII, and

Fig. 19 shows a plurality of assembled tubular elements Component parts having the same function are designated in all drawing figures with identical or analogous reference characters.

According to Figs. 1 and 2, a bracket 10, shown in its entirety on a smaller scale in Fig. 17, is essentially constituted by a tube flattened at the sides. The interior of the tube defines at the terminal portion therof, shown in the drawing, a narrow chamber 20 with side walls 10a, 10b. A slide 30, constituting the locking means and consisting of a single flat plate, is arranged in chamber 20 for rectilinear sliding motion. Locking means 30 is at its end projecting from the bracket provided with an engagement portion 30A with hook elements 31 which, in a manner known per se, can be inserted into holes 51 (Fig. 18) in a carrier rail 50 or similar. The distance $D$ in the hook elements 30 is somewhat larger tha

the thickness of the wall of the carrier rail 50, such that in the position shown in Fig. 1, the hook elements 31 can be lowered unimpededly onto the lower edge of respective hole 51, and can with equal ease be raised therefrom. The rest of the slide 30 constitutes the guiding portion 30B of the locking means 30 and this guiding portion never leaves the chamber 20.

In the guiding portion 30B there is provided a window 32 with side edges 32a, 32b, 32c and 32d. In the window 32 is an egg-shaped cam element 33, having a terminal portion 133 and essentially the same thickness $t$ (Fig. 4) as slide 30, mounted for rotation about an axis $C$. It will be realised from the study of Figs. 3 and 4, where a somewhat modified cam element is shown on a greater scale, that the cam element is provided with axle stubs 33a, 33a' projecting at both sides and mounted in an opening 233 in the cam element 33 or 33'. Cam element 33 or 33' is with the aid of said axle stubs rotarily mounted in holes 21 provided in both side walls 10a, 10b of the bracket 10. The holes 21 have a diameter corresponding to the diameter of the axle stubs 33a, 33a' and are thus considerably smaller than the whole cam element 33 or 33'. Cam element 33 is therefore fully encased by the side edges 32a to 32d of the window 32, and by the side walls 10a, 10b of the chamber 20.

A hexagonal opening 300 for the insertion of a conventional hexagonal key 330' extends through the axle stubs 33a, 33a'. The cam element 33' of Figs. 3 and 4 differs from the cam element 33 of Fig. 1 by being provided on a portion of its periphery, viz. at said extreme terminal portion 133, with an engagement promoting means defined by grooves 133', and further by the fact that the axle stubs 33a, 33a' are produced and fastened in a specially advantageous manner. Both axle stubs, or, more precisely, both projecting portions 33a, 33a' of the axle stubs, are constituted by portions of a single tube stump 331 which is at the outside cylindrical and which has an axially extending slot 331a, whose width dimension corresponds to one side of the hexagonal shape of the inner opening 330. The opening 233 is essentially circular, or more precisely cylindrical, but has a driver lug 233A which fits into the slot 331a. The diameter of the opening 233 is preferably made somewhat smaller than what the diameter of the tube stump 331 is before mounting.

The assembly of the device is executed as follows. The cam element 33 or 33" is freely inserted into the window 32 and the slide 30 is pushed into the chamber 20 as far as to position the opening 330 in front of the holes 21. The tube stump 301 is then somewhat compressed and is inserted into the opening 233 through one of the holes 21 and thereafter released. Sufficiently strong, non-rotary connection between the axle stubs 33a, 33a' and the cam element 33' is generally achieved already by friction between the expanded tube stump 331 and the wall of opening 233, and is further reinforced by the driver lug 233A. In order to facilitate positioning of the axle stump 331 in axial direction, a collar 331b, having somewhat greater diameter and defining one of the tube stumps 33a, may be provided. One of the holes 21 is then made larger to a corresponding extent.

The device operates as follows. In the projecting open position according to Fig. 1, the hook elements 31 project to such a degree from the bracket 10 that also edges 31a in the gaps between the "teeth" are exposed, i.e. situated outside the terminal edge 10c of bracket 10. The bracket is in conventional manner inserted into selected openings 51 (Fig. 18) and cam element 33 is with the aid of a hexagonal key 330' turned through $180^{\circ}$ in any of the two directions, until it reaches the closed position shown in Fig. 3 (or Fig. 5) in which it engages the inner side edge 32a of window 32. By this operation, slide 33 has been moved in the sense of arrow $P_1$ so far that the terminal edges 31a have come to lie a bit inside the terminal edge 10c of the bracket, as shown in Fig. 5 (and Fig. 6). The free distance $\underline{D}$ has been altered to a somewhat smaller distance $\underline{D'}$ (Figs. 5 and 6), whereby the portion of the carrier rail 50 (Fig. 18) which is situated beneath the respective opening 51 is clamped so that the bracket 10 is locked with the carrier rail 50. The hexagonal key can now be removed from the opening 330. For dismantling, the process is reversed.

Due to the narrow shape of the chamber 20, and to the circumstance that the height $\underline{h}$ thereof is essentially equal to the height of the locking element, the guiding portion 30B of the locking element 30 is rectilinearly guided in its sliding movements, as will be best understood from a study of Fig. 2 in connection with Fig. 5 or 6.

The cam element may be given self-braking peripheral shape, so that no additional detention means are necessary. However, for increased detention effect, at least a portion of the peripheral edge of the locking element can be according to Fig. 3 and 4 provided with an engagement promoting means, such as grooves 133, and//or a particular detention element, such as a resilient element 34 according to Fig. 5, can be provided for co-operation with a suitably modified peripheral edge 133" on the cam element 33".

Still safer detention of slide 30 will be achieved according to Fig. 6 with the aid of an extra detention screw 22 screwed-in into the wall of bracket 10 and co-operating with a recess 34' provided to this purpose in the edge of slide 30.

In Fig. 7 there is shown a bracket 10' provided at both ends with a device according to the present invention so that it may be inserted between two carrier means situated at a firm mutual spacement $A$ and provided with openings 51, such as a carrier rail 50 and a carrier post 50' (Fig. 17). When the bracket 10', which has a leng equal to the spacement $A$, is being inserted, the engagement portions 30A with the hook elements 31 are fully retracted, as shown in Fig. 7, and the bracket is placed adjacent to selected openings 51 in the carrier means 50 and 51'. The locking means 30 at both ends of the bracket are then brought into the projecting position shown in Fig. 1, and bracket 10' is pressed down until the hook elements 31 rest on the lower edges of the openings 51. The locking means 30 are then brought into the partially retracted locking position shown in Fig. 6. When the bracket is to be removed, the process is carried out in reverse order.

The relations between certain dimensions illustrated in Figs. 1 and 5 do not allow a complete retraction of the engagement portion 30A as shown in Fig. 7, while in Fig. 6 is shown an embodiment which enables such a complete retraction. The cam element 3''' has there a peripheral shape comprising a first terminal portion 133 in complete analogy to cam element 33 of Fig. 1, and further a second terminal portion 233 which is situated considerably farther away from the axle stub 33a or the rotational axis $C$ of the cam element 33''' than the first terminal portion 130. The distance $B$ between the rotational axis $C$ of the cam element and terminal portion 230 is such that the locking means 30 is brought into the maximally retracted position shown in Fig. 7 when the terminal portion 230 comes into contact with the inner side edge 32a of window 32, and after this position has been reached, the bracket 10' can be inserted between the carrier means 50 and 50'. Thereupon, cam element 33''' is turned through 90° in the sense of arrow $P_2$, whereby locking means 30 is brought into a projecting position analogous to the position of Fig. 1 by the action of a compression spring means 23, anchored at one end in a fastener 24 provided in the bracket 10'. Bracket 10' is then pressed down in the openings 51, and by turning cam element 33''' further through $90°$ in the sense of arrow $P_2$, the locking means 30 is brought into the locked position shown in Fig. 6 where the first terminal portion 130 bears on the engagement edge 32a in the same way as with cam elements 30 and 30'. This position may be locked by a detention screw 22 if desired.

The window 32' has such a height dimension $\underline{h}$ that the cam element 33''' with its longitudinal shape may be turned through $180°$ at least in one direction, upward in the example shown. In this connection it will be realised that window 32 principally does not need to be closed, i.e. limited by edges on all sides, but that it may be open at the top or at the bottom, i.e. be defined by a U-shaped recess in the guiding portion 30B of locking means 30.

A spring means corresponding to the spring means 23 of Fig. 6 can of course be used also in the other embodiments. While in Fig. 1 the locking means 30 has been brought into the illustrated projecting position by the terminal portion 133 of the cam element 33 engaging the outer side edge 32b of the window 32, such engagement or contact is not necessary when a spring means 23 is acting on the locking means 30 against the sense of arrow $P_1$.

In the Figs. 8 to 11 is shown an alternative embodiment of an egg-shaped cam element 130 similar to the cam element 33 of Fig. 1. Cam element 130 is characterized by its dimensions $\underline{e}$, $\underline{f}$, $\underline{g}$ measured along the longitudinal and the transversal axes $A_1$ and $A_t$ thereof, with a start at the rotational axis $\underline{C}$. More specifically, cam element 133 has along the longitudinal

axis $A_1$ a minimum dimension $\underline{e}$ with an end point $e_s$ on the periphery of the cam element 130, and a longest dimension $\underline{g}$ with an end point $g_s$ also along the longitudinal axis $A_1$, and further a dimension $\underline{f}$ with an end point $f_s$ along the transversal axis $A_t$.

Said dimensions are selected so that when cam element 130 is rotated into the three operative positions shown in Figs. 9 to 11, the locking means 30 is brought into the following positions:

Fig. 9: End point $e_s$ bears against the side edge 32a of window 32 and the locking means 30 occupies an open position in analogy to Fig. 1. The length dimension $\underline{d}$ of the window 32 is preferably made equal to, or slightly greater than $\underline{e+g}$, so that also the end point $g_s$ bears against one side edge of the window 32, viz. the outer side edge 32b thereof, whereby the position of the locking means 30 is completely stabilized.

Fig. 10: By a turn of only $90^\circ$ about the rotational axis $\underline{C}$ the end point $f_s$ is brought to bear against the inner side edge 32a of the window 32, whereby the closed position in analogy to Fig. 5 is obtained.

Fig. 11: By a further turn through $90^\circ$ in the sense of arrow $P_3$ the end point $g_s$ is brought to bear against the inner side edge 32a of the window 32, whereby the locking means is brought into the most retracted position according to Fig. 7.

It will be understood from a study of the Figs. 9 to 11 that, on the one hand, possible engagement promoting means, such as the grooves 133' of Fig. 3, should be in the cam element 130 situated in the region between the points $e_s$ and $\underline{i}$ (Fig. 8), and, on the other hand, that only one half of the periphery of the cam element, e.g. the half comprising the points $e_s$ - $f_s$ - $i$ - $g_s$ in Fig. 8, comes into contact with the side edges of the window

32. Consequently, the other half may have an optionally different shape. Dimension $e$ corresponds to the dimension $e'$ in Fig. 1, dimension $f$ corresponds to the dimension $f'$ in Fig. 5, and dimension $g$ corresponds to the dimension $e'+g'$ in Fig. 1. The mutual relation of the dimensions $e$, $f$, $g$ is defined by the expression

$$e<f<g.$$

In Figs. 12 to 15 is shown another alternative embodiment of a locking means 30 with a window 320 in which a cam element 230 is situated.

According to Fig. 12, cam element 230 has on both sides of the rotational axis $C$ a rounded protrusion or projecting point 230A, 230B. Each point is on the outside limited by an arcuate outer edge 230c, 230d. Edge 230c passes tangentially into a straight edge portion 230e which at 230e' joins the other arcuate edge 230d. The distance $u$ between the center 230c' of edge 230c and the axis $C$ is smaller, e.g. by 10%, than the distance $v$ between the end of edge 230c and axis $C$.

According to Figs. 13 to 15, the window 320 is somewhat longitudinal, i.e. its largest dimension $i$, extending in the direction of movement of the locking means 30, is greater than its height $h$. Approximately in mid-length there is provided a driver projection 321 which is broader at the end than at the root and which projects into the window opening. The window 320 is at both sides of the projection 321 limited by arcuate side edges 320a, 320b. Edge 320a, which lies closer to the engagement portion 30A of the locking means, extends essentially as far as to a location right opposite the projection 321, i.e. edge 320a has principally the shape of a semi-circle. The other arcuate side edge 320b extends approximately only as far as to half the height $h$, i.e. it has essentially the shape of a quarter of a circle. To the two arcuate edges are tangentially joined straight edge portions 320c, 320d which subtend a right angle one with another and form a rounded corner 320e in the same manner as in a quadrangular window, e.g. that of Fig. 1.

The cam element 230 is placed in the window 320 so that the arcuate edge 230c, which tangentially joins the straight section 230e, lies closer to the corner 320e. The point 230A at this edge 230c is somewhat shorter (less projecting) than the other point 230B.

In Fig. 13, the locking means 30 is shown in its most projecting position in which it can be inserted into openings 51 in a rail 50 or the like. Cam element 230 is so turned that its straight edge portion 230e bears against the straight side edge portion 320d of the window 320. This position is secured by the point 230A being situated adjacent the projection 321, so that the locking means 30 cannot by itself move in either direction. By a turn through approximately $60^\circ$ in counter clockwise direction, the locking means is brought into the locking position of Fig. 14 in which the cam element 230c, with its edge portion 230c' situated at said distance $\underline{u}$, bears against the location on the side edge of window 320 where the arcuate edge portion 320b merges into the straight edge portion 320. Thanks to the above relation between the distances $\underline{v}$ and $\underline{u}$, the locking means is fixed in this position, i.e. the hook elements 31 of the engagement portion 30A are firmly pressed against wall portions 50A of the rail 50.

For releasing, the locking means is brought back into the position of Fig. 13, whereupon by a counter clockwise rotation through nearly $180^\circ$ it may be brought into the fully retracted position of Fig. 15, where the point 230B meshes with the projection 321 and a bracket or similar mounted in "wall-to-wall" manner, may be removed. In this position, which is also suitable for transport, the locking means cannot fall out the bracket 10 as it is fixed due to co-operation of the projection 321 with the point 230B. Thus, the locking means is fixed in all three of its specific positions thanks to the special shaping of the locking means and window shown in Figs. 12 to 15.

The device according to the invention may also be produced as an independent unit, i.e. with a casing of its own which may be attached to or mounted into any optional structural part to be carried by another structural part. A first embodiment is evident e.g. from Figs. 1, 5 and 6, if the bracket 10 there is supposed to be cut-off approximately where the fastener 24 is situated in Fig. 6, and a terminal wall, which also may define a fastener for a resilient means 23, is possibly, but not necessarily, provided there. The outer dimensions of the casing may of course be selected so that the whole device can be inserted into a hollow bracket in the walls of which holes providing access to the opening 330 have been arranged. The casing is in a suitable manner (jolting, bonding, riveting etc) fixed in the bracket. An advantage of the solution with an independent unit is, among other things, the fact that the length A of a bracket 10' (Fig. 17) may be adjusted quite individually by a cut at a selected location, whereupon the device according to the invention is inserted.

Another embodiment of an independent unit is shown in Fig. 16. The first structural part consists of a cylindrical tube 10" which at both ends shall be affixed to structural parts also defined by cylindrical tubes 13 according to Fig. 17. The device according to the invention has a separate casing 12 in which the locking means and the cam element are contained and from which axle stubs 33a project. The engagement portion of the locking means is defined by a yoke 310 in the shape of a circular arc to the extent of approximately 180°

and the inner diameter of which corresponds to the outer diameter of the tube 13. The front edge 12a of the casing 12 is for better engagement also shaped into a circular arc in continuation of yoke 310, so that the tube 13 is in the retracted, i.e. locked position, shown in Fig. 17, encompassed to more than 180° and is thus locked. The outer wall of the casing 12 is essentially cylindrical with a diameter corresponding to the inner diameter of the tube 10", and the casing is fixed in the tube 10" with the aid of several retainer screws 24. The tube 10" is provided with holes for access to the axle stubs 33a, or, more correctly, to their openings 330. The casing of an independent unit may also have a different cross-sectional shape than the structural part which it is to be mounted into.

In Fig. 17 and 18 is shown a gable assembly appertaining to a display rack and comprising a carrier rail 50 which by screws 51a (Fig. 18) is affixed to a wall, and a carrier post 50' which by screws 51b is anchored to the floor at a distance A in front of the carrier rail 50. The carrier rail 50, as well as the carrier post 50', are at the sides which are turned one against the other provided with elongated openings 51 (Fig. 18) for the hook elements 31. A bracket 10, a bracket 10', and a cylindrical tube 10" are mounted on, or, more precisely, between, the carrier elements 50 and 50'. The bracket 10 carries a shelf 11 and the tube 10" rests on two tubes 13 which extend, the same as the shelf 11, perpendicularly to the plane of the drawing to another gable assembly of identical construction, not shown. It will be realised that no joints are perceivable at the locations E and F where the bracket 10' is mounted, because the bracket has the length A.

In Fig. 19 are shown, partly in section, five tubular elements assembled according to the invention. The tube 13'a is at its lower end affixed to a tube 10"b extending at right angles to the plane of the drawing and to which a further tube 13'b, coaxial with tube 13'a, and another tube 10"d, are affixed. Further affixed to the tube 13'a are tubes 10"a and 10"c which are parallel with the tube 10"d. All tubes are provided with a mounting device according to the invention, as shown in tube 10"a, and are preferably provided with several rows of openings 51a, 51b, 51c distributed along the periphery of the respective tube, e.g. at angular intervals of $90^{\circ}$.

Thanks to the device according to the invention, a bracket such as e.g. the bracket 10 of Fig. 17, can by locking not only be secured against unauthorized removal, but it can also be fixed in its position in the horizontal plane, which otherwise only is achieved by providing the bracket with two adjacent sets of hook elements and/or or by screwing on a shelf 11 or similar to the free end of the bracket.

Several further modifications are comprised within the scope of the present invention, e.g. the cam element can be provided with a permanent handle for turning.

## Patent claims:

1. A device for detachable joining of two structural parts (10, 50) of which the one (10) is provided with a locking means (30) which can be made to project and to withdraw and which has a guiding portion (30B) adapted for gliding motion in a cavity (20) in the structural part and actuatable therein by an actuating means (33) which in its turn is operatable by a manually actuatable turning device, and an engagement portion (30A) for engagement with the other structural part (50), affixed to the guiding portion, c h a r a c t e r i z e d   by the locking means consisting at least in the guiding portion of a single, flat and rigid plate in which there is provided a window (32) limited by side edges (32a to 32d), the actuating means being defined by a plate-shaped, flat cam element (33) with essentially the same thickness (t) as the guiding portion and situated in said window for rotation about an axis (C) perpendicular to the plane of the guiding portion, said cam element being adapted for engagement with at least one of said side edges of the window and provided with a means (33a') for non-rotary connection with said turning device, said cavity being defined by a narrow chamber with two opposite, plane side walls (10a, 10b) which sidewise encompass and guide said guiding portion and of which at least one is provided with a hole (21) in face of said window, through which hole the effect of the turning device can be transferred to the cam element which also is sidewise guided and retained on its place by said side walls.

2. A device according to claim 1, c h a r a c t e r i z e d   by the engagement means for the turning device being defined by an axle stub (33a) which is non-rotarily affixed to the cam element and has a portion which at least in one direction projects from the cam element and is rotarily mounted in said hole in the side wall.

3. A device according to claim 2, c h a -
r a c t e r i z e d  by the axle stub being defined
by an axially slotted tube stump which is by press fit
non-rotarily affixed to the cam element and has a non-
cylindrical inner opening for non-rotary engagement
with the turning device.

4. A device according to claim 3, c h a -
r a c t e r i z e d  by the non-cylindrical opening
having in known manner hexagonal shape in cross-section for engagement with a conventional hexagonal key,
and the axial slot in the tube stump and the driver
lug situated therein occupying the place of one side
of the hexagonal shape.

5. A device according to one or more of the
preceding claims, c h a r a c t e r i z e d  by the
entire locking means being defined by a single flat,
rigid plate and the engagement portion being in known
manner defined by at least one hook element disposed
at one transverse edge of the plate, or by at least one
yoke element.

6. A device according to one or several of the
preceding claims, c h a r a c t e r i z e d  by the
window in the locking means being elongate  in the
sense of motion ($P_1$) of the locking means and essentially in half its length (i)  is  provided with a
driver projection (321) projecting into the opening of
the window, the side edges (320a, 320b) on both sides
of the driving projection being arcuately bent in the
same direction as the projection extends and extending,
on the side farther from the engagement portion (30A)
of the locking means, as far as to a location right
opposite the driving projection, and on the other side
approximately to half the height (h) of the window,
the cam element being on both sides of its axis provided
with one projecting point (230A, 230B) limited by an
outer arcuate edge (230c, 230d).

7. A device according to claim 6, c h a - r a c t e r i z e d by the fact that both said arcuate side edges of the window merge into tangentially joined straight edge portions (320c, 320d) which meet one another in a corner (320e), and that the arcuate edge (230c) of the cam element which is farther away from the engagement portion of locking means continues tangentially with a straight edge portion (230e) to which the other arcuate edge (230d) of the cam element is joined.

8. A device according to one or more of the preceding claims, c h a r a c t e r i z e d by the engagement portion comprising at least one yoke (310) shaped to encompass the outside of the other structural part.

9. A device according to one or more of the preceding claims, c h a r a c t e r i z e d by said chamber being defined by the terminal portion of a flattened bracket defining one of the structural parts.

10. A device according to one or more of the claims 1 to 8, c h a r a c t e r i z e d by said chamber being arranged in an independent casing (12) which is attachable to the one structural part.